(19) Europäisches Patentamt
European Patent Office
Office européen des brevets

(11) **EP 3 425 568 A1**

(12) **DEMANDE DE BREVET EUROPEEN**

(43) Date de publication:
**09.01.2019 Bulletin 2019/02**

(51) Int Cl.:
*G06K 19/06* (2006.01)    *G06K 7/14* (2006.01)

(21) Numéro de dépôt: **18182246.1**

(22) Date de dépôt: **06.07.2018**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **07.07.2017 FR 1756440**

(71) Demandeur: **Gaudin, Eric**
**72130 Gesnes le Gandelin (FR)**

(72) Inventeur: **Gaudin, Eric**
**72130 Gesnes le Gandelin (FR)**

(74) Mandataire: **IPAZ**
**Parc Les Algorithmes, Bâtiment Platon**
**CS 70003 Saint-Aubin**
**91192 Gif-sur-Yvette Cedex (FR)**

(54) **CODE-BARRE À DEUX DIMENSIONS ENCODANT UNE DONNÉE D'ENTRÉE, PROCÉDÉ D'ENCODAGE DE CETTE DONNÉE ET DE DÉCODAGE DE CE CODE-BARRE DEUX DIMENSIONS**

(57) Code-barre (1) à deux dimensions encodant une donnée d'entrée d, caractérisé en ce qu'il comporte une courbe Cf encodant ladite donnée d'entrée, ladite courbe Cf étant une représentation, dans le plan complexe, d'un polynôme trigonométrique.

Figure 1

EP 3 425 568 A1

**Description**

**Domaine technique**

La présente invention appartient au domaine du codage et du décodage de données, et plus particulièrement au domaine du codage de données par un code à deux dimensions.

**État de la technique**

On connaît des code-barres à deux dimensions encodant une donnée d'entrée, en particulier le QR Code, pour l'anglais « Quick Response Code ».

Le QR Code nécessite un ciblage particulier, du fait de sa géométrie rectangulaire orientée par le positionnement particulier de trois rectangles en ses coins. Ce ciblage n'est pas aisé.

Un but de l'invention est de remédier, en tout ou partie, à l'au moins un des inconvénients précités.

**Résumé de l'invention**

On atteint au moins un but de l'invention avec un code-barre à deux dimensions encodant une donnée d'entrée d, ledit code-barre comportant une courbe Cf encodant ladite donnée d'entrée, la courbe Cf étant une représentation, dans le plan complexe, d'un polynôme trigonométrique.

Le polynôme trigonométrique peut être écrit sous forme d'une fonction $f_d$ d'une variable scalaire sur l'intervalle $[0,2\pi]$, à valeur dans le plan complexe, et vérifiant l'équation :

$$f_d(t) = \sum_{j=1}^{N} R_j e^{i\,\phi_j} e^{in_j t} \ \text{ avec } t \in [0,2\pi]$$

où la donnée d'entrée d est associée à un mot de codage $c_d$, ledit mot de codage $c_d$ étant déterminé par les triplets $(R_j, \phi_j, n_j)$ pour j variant de 1 à N, où $N \leq P$, avec P la dimension de l'espace de codage.

Une telle fonction est toujours périodique, de période $2\pi$.

Avantageusement, le polynôme trigonométrique peut être invariant par rotation d'angle $2\pi/m$ avec $m \geq 2$.

Selon une possibilité, la courbe Cf peut présenter au moins une invariance par rotation d'un angle non nul autour d'un axe perpendiculaire à une surface plane contenant ladite courbe Cf. De préférence, la courbe Cf présente au moins une invariance par rotation d'un angle non nul autour d'un axe perpendiculaire à une surface plane contenant ladite courbe Cf.

Selon une possibilité, le plan complexe peut être divisé en m secteurs angulaires, un secteur angulaire contenant une représentation partielle du polynôme trigonométrique, chacun des autres secteurs angulaires comprenant une représentation partielle d'un polynôme trigonométrique.

Avantageusement, la courbe Cf peut être contenue à l'intérieur d'une zone, dite d'encodage de donnée, le code-barre pouvant comporter en outre une zone, dite anticopie, agencée pour recevoir un dispositif anticopie, la zone anticopie et la zone d'encodage de donnée pouvant présenter une intersection vide.

Selon un mode de réalisation, la zone anticopie est une zone centrale par rapport à un centre dudit code-barre.

De préférence, la zone d'encodage de donnée est une couronne disposée entre deux cercles concentriques, chacun des cercles étant disposé à l'extérieur de zone anticopie.

Selon une variante, le code-barre peut en outre comporter une marque pour définir une origine angulaire de la courbe Cf.

Avantageusement, la marque peut être disposée dans la zone d'encodage de donnée comportant la courbe Cf.

Code-barre selon l'une quelconque des revendications précédentes, comportant en outre une zone qui comprend des moyens pour indiquer des positions d'échantillonnage de la courbe Cf.

Selon un deuxième aspect de l'invention, il est proposé un procédé de représentation d'une donnée d'entrée d par une courbe, ledit procédé comportant les étapes suivantes :

- une détermination, à partir de la donnée d'entrée, d'un mot de codage $c_d$ d'un alphabet de codage, chaque mot de codage comprenant N triplets, chaque triplet comprenant une valeur $R_j$ de rayon, une valeur $\phi_j$ de déphasage et une valeur $n_j$ de vitesse,
- une génération d'une courbe Cf d'une fonction $f_d$ représentée dans le plan complexe, ladite fonction étant un polynôme trigonométrique définie par l'équation :

$$f_d(t) = \sum_{j=1}^{N} R_j e^{i\,\phi_j} e^{in_j t} \ avec\ t \in [0,2\pi]\ .$$

Avantageusement, les valeurs de rayons peuvent être telles que la valeur $R_1$ du premier rayon est strictement supérieure à la somme des valeurs des autres rayons, ce qui peut s'écrire :

$$R_1 - \sum_{j=2}^{N} R_j > 0\ .$$

Le procédé selon le deuxième aspect de l'invention peut en outre comporter une étape d'impression de la courbe Cf sur un support papier.

Dans une version préférée, le procédé selon le deuxième aspect de l'invention peut en outre comporter une insertion d'un dispositif anticopie, et, lorsque le procédé vérifie l'inégalité $R_1 - \sum_{j=2}^{N} R_j > 0$ , le dispositif est placé à l'intérieur du cercle de rayon $R_1 - \sum_{j=2}^{N} R_j$.

Selon un troisième aspect de l'invention, il est proposé un procédé de décodage d'une donnée d'entrée d, à partir d'une courbe Cf représentant lesdites données, ledit procédé comportant les étapes suivantes :

- une acquisition de ladite courbe Cf et une détermination d'un mot de codage à partir de ladite courbe acquise, la courbe Cf représentant dans le plan complexe une fonction f, la fonction f étant un polynôme trigonométrique définie par l'équation :

$$f(t) = \sum_{j=1}^{N} R_j e^{i\,\phi_j} e^{in_j t} \ avec\ t \in [0,2\pi]\ ,$$

où N est un nombre de triplets, chaque triplet comportant une valeur $R_j$ de rayon, une valeur $\phi_j$ de déphasage et une valeur $n_j$ de vitesse

- une détermination de la donnée d'entrée à partie dudit mot de codage déterminé.

La détermination du mot de codage à partir de la courbe acquise peut comprendre :

- un échantillonnage de P points de la courbe acquise pour déterminer P couples, chacun des couples comportant d'une part une valeur $t_k$ de la variable temporelle et d'autre part ses coordonnées $f(t_k)$ dans le plan complexe,
- un calcul des N triplets du mot de codage par inversion de la formule :

$$\begin{pmatrix} f(0) \\ \vdots \\ f(t_{P-1}) \end{pmatrix} = M \begin{pmatrix} R_1 e^{i\,\phi_1} \\ \vdots \\ R_P e^{i\,\phi_P} \end{pmatrix} avec\ M = \begin{pmatrix} 1 & \cdots & 1 \\ \vdots & \ddots & \vdots \\ e^{i\,n_1\,t_{P-1}} & \cdots & e^{i\,n_P\,t_{P-1}} \end{pmatrix}.$$

Cette inversion peut être déterminée à partir de l'inverse de la matrice M, s'il elle est inversible, ou à partir du calcul de la pseudo-inverse de la matrice M.

On obtient :

$$\begin{pmatrix} f(0) \\ \dots \\ f(t_{P-1}) \end{pmatrix} = \begin{vmatrix} 1 & \dots & 1 \\ \vdots & \vdots & \vdots \\ e^{in_1 t_{P-1}} & \dots & e^{in_P t_{P-1}} \end{vmatrix} \begin{pmatrix} R_1 e^{i\,\phi_1} \\ \vdots \\ R_P e^{i\,\phi_P} \end{pmatrix}$$

Dans le cas d'un polynôme trigonométrique avec m motifs à partition régulière, on obtient :

$$\begin{pmatrix} f(0) \\ \dots \\ f(t_{P-1}) \end{pmatrix} = \begin{vmatrix} 1 & \dots & 1 \\ \vdots & \vdots & \vdots \\ e^{i(a+mK_1)t_{P-1}} & \dots & e^{i(a+mK_P)t_{P-1}} \end{vmatrix} \begin{pmatrix} R_1 e^{i\phi_1} \\ \vdots \\ R_P e^{i\phi_P} \end{pmatrix}$$

Selon un autre quatrième aspect de l'invention, il est proposé une unité d'encodage comportant une unité de calcul configurée pour recevoir une donnée d'entrée et mettre en oeuvre un procédé de représentation de ladite donnée d'entrée par une courbe selon le deuxième aspect de l'invention, ou l'un ou plusieurs de ses perfectionnements.

Selon encore un cinquième aspect de l'invention, il est proposé une unité de décodage comportant une unité de calcul configurée pour mettre en oeuvre un procédé de détermination d'une donnée d'entrée à partir d'une courbe représentant lesdites données selon le troisième aspect de l'invention, ou l'un ou plusieurs de ses perfectionnements.

Il est aussi proposé un système de codage et de décodage, comportant au moins une unité de codage selon le quatrième aspect de l'invention, ou l'un ou plusieurs de ses perfectionnements et une unité de décodage selon le cinquième aspect de l'invention, ou l'un ou plusieurs de ses perfectionnements.

**Description des figures**

D'autres particularités et avantages de l'invention apparaîtront à la lecture de la description détaillée de mises en oeuvre et de modes de réalisation nullement limitatifs, au regard de figures annexées sur lesquelles :

- la figure 1 est une représentation schématique d'un code-barre selon un premier mode de réalisation de l'invention,
- la figure 2 est une représentation schématique d'un code-barre selon un deuxième mode de réalisation de l'invention,
- la figure 3 est une représentation schématique d'un code-barre selon un troisième mode de réalisation de l'invention,
- la figure 4 est une représentation schématique d'un code-barre selon un quatrième mode de réalisation de l'invention
- la figure 5 est une représentation schématique d'un procédé d'encodage selon l'invention,
- la figure 6 est une représentation schématique d'un procédé de décodage selon l'invention.

**Description de l'invention**

Ces modes de réalisation n'étant nullement limitatifs, on pourra notamment réaliser des variantes de l'invention ne comprenant qu'une sélection de caractéristiques décrites par la suite, telles que décrites ou généralisées, isolées des autres caractéristiques décrites, si cette sélection de caractéristiques est suffisante pour conférer un avantage technique ou pour différencier l'invention par rapport à l'état de la technique.

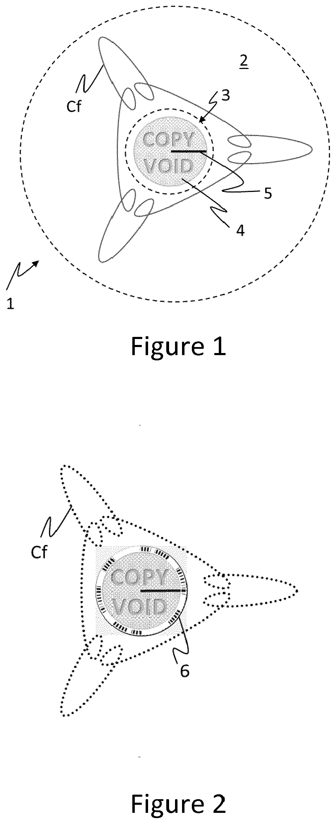

Il est représenté sur la figure 1 un code-barre 1 selon un premier mode de réalisation de l'invention. Le code-barre 1 comporte une courbe Cf encodant la donnée d'entrée, ladite courbe Cf étant une représentation, dans le plan complexe, d'un polynôme trigonométrique. Le polynôme trigonométrique peut être écrit sous forme d'une fonction $f_d$ d'une variable scalaire sur l'intervalle $[0,2\pi]$, à valeur dans le plan complexe, et vérifiant l'équation :

$$f_d(t) = \sum_{j=1}^{N} R_j e^{i\phi_j} e^{in_j t} \text{ avec } t \in [0,2\pi]$$

où la donnée d'entrée $d$ est associée à un mot de codage $c_d$, ledit mot de codage $c_d$ étant déterminé par les triplets $(R_j, \phi_j, n_j)$ pour j variant de 1 à N, où N≤P, où P est une dimension de l'espace de codage.

Dans l'exemple représenté sur la figure 1, la courbe Cf est contenue à l'intérieur d'une zone 2, dite d'encodage de donnée, et le code-barre comporte en outre une zone 3, dite anticopie.

Selon l'exemple, la zone anticopie 3 et la zone d'encodage de donnée 2 présente une intersection vide.

Toujours selon l'exemple représenté, la zone 3 anticopie reçoit un dispositif anticopie 4 et est une zone centrale par rapport au centre du code-barre 1.

La zone d'encodage de donnée est, dans cet exemple, une couronne disposée entre deux cercles concentriques, chacun des cercles étant disposé à l'extérieur de zone 3 anticopie. Ces deux cercles sont tracés en pointillés sur la figure 1.

Le code-barre 1 comporte en outre une marque 5 pour définir une origine angulaire de la courbe Cf. La marque 5 est disposée dans la zone anticopie 2 comportant la courbe Cf.

Dans l'exemple représenté, le polynôme trigonométrique est invariant par rotation d'angle $2\pi/3$. La courbe Cf présente 2 invariances par rotation d'un angle $2\pi/3$, respectivement $4\pi/3$, autour d'un axe perpendiculaire à une surface plane contenant ladite courbe Cf. Aussi, 2/3 de la courbe Cf peut être dégradé sans qu'aucune information sur la donnée encodée ne soit perdue.

Courbes à motifs.

Un polynôme trigonométrique présente m motifs avec une partition régulière de la variable $(\frac{\theta}{m}\ ou -\frac{\theta}{m})$ pour laquelle un motif et l'image du précédent par une rotation d'angle $(\frac{2\pi a}{m}\ ou\ \frac{-2\pi a}{m})$, si et seulement si, le polynôme trigonométrique peut s'écrire :

$$f(t) = \sum_{J=1}^{N} R_j e^{i\,\phi_j} e^{i(a+mK_j)t}$$

avec a et $m \in \mathbb{N}^*$ et $K_j \in \mathbb{Z}$, a et m premier entre eux, et a < m

La figure 2 est une représentation schématique d'un code-barre selon un deuxième mode de réalisation de l'invention. Elle est uniquement décrite pour ses différences avec le premier mode de réalisation.

Sur cette représentation, la courbe Cf n'est plus dessinée en trait continu, mais au moyen de points régulièrement répartis. La courbe Cf de la figure 2 peut être vue comme une version perlée de la courbe Cf de la figure 1.

Le code-barre représenté sur la figure 2 comporte en outre une zone 6 qui comprend des moyens pour indiquer des positions d'échantillonnage de la courbe Cf.

La zone 6 permet en outre un contrôle d'une déformation d'une image résultant d'une acquisition du code-barre.

Enfin, la zone 6 permet de connaître, via une marque spécifique qui y est définie, un point de la courbe défini comme initial.

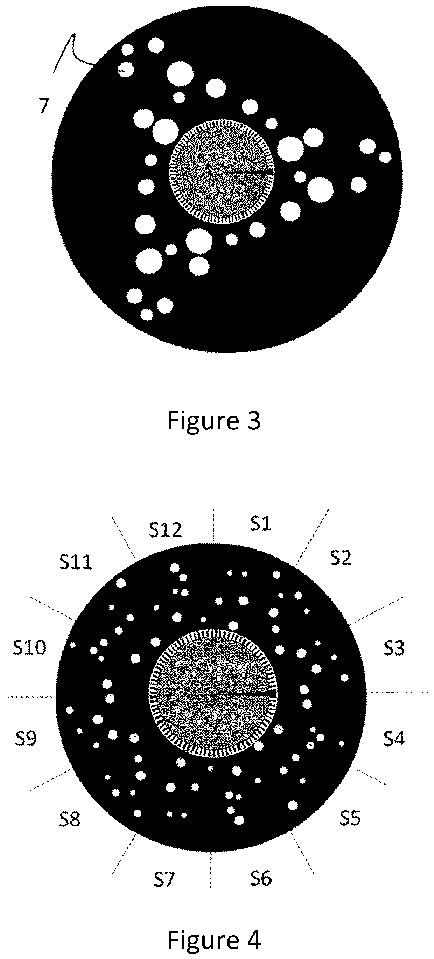

La figure 3 est une représentation schématique d'un code-barre selon un troisième mode de réalisation de l'invention. Elle est uniquement décrite pour ses différences avec le premier mode de réalisation.

Sur cette représentation, la courbe Cf n'est plus dessinée en trait continu, mais au moyen d'échantillonnages 7.

La figure 4 est une représentation schématique d'un code-barre selon un quatrième mode de réalisation de l'invention. Elle est uniquement décrite pour ses différences avec le troisième mode de réalisation.

Le plan complexe est divisé en 12 secteurs S angulaires, numérotés de S1 à S12. Chaque secteur angulaire contient une représentation partielle d'un polynôme trigonométrique. Ce découpage permet de représenter 12 secteurs angulaires différents, et donc de multiplier le nombre de données encodées.

Dans ce cas, la zone 6 permet de connaître, via 12 marques spécifiques qui y sont représentées, 12 points initiaux de chacune des représentations partielles de polynôme trigonométrique.

En outre, sur l'exemple représenté, chaque représentation partielle est réalisée sous la forme d'un ensemble de disques circulaires dont le diamètre croît à mesure que l'abscisse curviligne de la valeur du polynôme trigonométrique grandit.

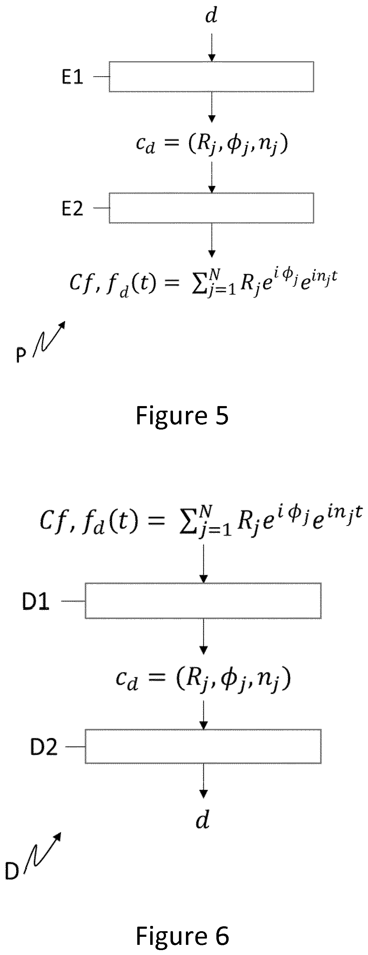

Il est maintenant décrit, en relation avec la figure 5, un procédé P de codage d'une donnée d'entrée d par une courbe.

Le procédé P comprend les étapes suivantes :

- une étape E1 de détermination, à partir de la donnée d'entrée, d'un mot de codage $c_d$ d'un alphabet de codage, chaque mot de codage comprenant N triplets, chaque triplet comprenant une valeur $R_j$ de rayon, une valeur $\phi_j$ de déphasage et une valeur $n_j$ de vitesse,

- une étape E2 de génération d'une courbe Cf d'une fonction $f_d$ représentée dans le plan complexe, ladite fonction étant un polynôme trigonométrique définie par l'équation : $f_d(t) = \sum_{j=1}^{N} R_j e^{i\,\phi_j} e^{in_j t}$ avec $t \in [0, 2\pi/m]$ et $m \in N^*$, où m est un nombre de motif.

Selon un exemple avantageux, les valeurs Rj sont déterminées de sorte que :

$$R_1 - \sum_{j=2}^{N} R_j > 0 \ .$$

Ainsi, le dispositif anticopie peut être inséré dans un centre de rayon égal à $R_1 - \sum_{j=2}^{N} R_j$.

Le procédé P peut comprendre en outre une étape d'impression E3, non représentée, de la courbe Cf sur un support papier.

Le procédé P peut comporter une étape d'insertion E4, non représenté, d'un dispositif anticopie placé à l'intérieur du cercle de rayon $R_1 - \sum_{j=2}^{N} R_j$.

Il est maintenant décrit, en relation avec la figure 6, un procédé D de décodage d'une donnée d d'entrée, à partir d'une courbe Cf représentant lesdites données, ledit procédé comportant les étapes suivantes :

- une étape acquisition de ladite courbe et une étape D1 de détermination d'un mot de codage $c_d$ à partir de ladite courbe acquise, la courbe Cf représentant dans le plan complexe une fonction f, la fonction f étant un polynôme trigonométrique définie par l'équation : $f(t) = \sum_{j=1}^{N} R_j e^{i\,\phi_j} e^{i n_j t}$ $avec\ t \in [0, 2\pi/m]\ et\ m \in N^*$, où m est un nombre de motif où N est un nombre de triplets, chaque triplet comportant une valeur $R_j$ de rayon, une valeur $\phi_j$ de déphasage et une valeur $n_j$ de vitesse
- une étape D2 détermination de la donnée d d'entrée à partie dudit mot de codage déterminé.

Entre l'étape d'acquisition de la courbe et l'étape D1, le procédé D, et de manière générale tout procédé selon l'invention, peut comprendre :

- une étape de calcul de coordonnées de points constitutifs de la courbe, éventuellement après une étape de correction de l'anamorphose et recalage de l'origine des angles,
- à partir d'un point de la courbe défini comme initial (par exemple au moyen d'une marque spécifique disposée dans la zone 6 pour définir une origine angulaire sur le code-barre), une étape de suivi des pixels adjacents en enregistrant pour chacun d'entre eux leurs coordonnées (x,y) ainsi que leurs coordonnées polaires ($\rho,\alpha$) et le rayon de courbure et,
- si les pixels suivants se divisent en deux branches distinctes, un choix de suivi de la branche dont le rayon de courbure est le plus proche de la dernière valeur calculée.

L'étape de suivi s'arrête lorsque l'ensemble des points pixellisés a été balayé et que l'on se retrouve au point initial.

Une fois l'étape de suivi terminée, les couples (x(u), y(u)) sont complets et ordonnés, et le procédé, peut comprendre, de manière générale, un calcul de l'abscisse curviligne s(t) et une décomposition de l'abscisse curviligne la décomposer en m séquences qui correspondent à chacun des motifs.

La zone 6 apporte la connaissance de ces m séquences et indique des positions d'échantillonnage de la courbe Cf pour extraire uniquement les points nécessaires au décodage. Il peut ainsi être obtenu un échantillonnage de P points.

L'étape de détermination D1 du mot de codage $c_d$ à partir de la courbe acquise comprend :

- un échantillonnage de P points de la courbe acquise pour déterminer P couples, chacun des couples comportant d'une part une valeur $t_k$ de la variable temporelle et d'autre part ses coordonnées $f(t_k)$ dans le plan complexe,
- un calcul des N triplets du mot de codage par inversion de la formule :

$$\begin{pmatrix} f(0) \\ \vdots \\ f(t_{P-1}) \end{pmatrix} = M \begin{pmatrix} R_1 e^{i\,\phi_1} \\ \vdots \\ R_P e^{i\,\phi_P} \end{pmatrix} avec\ M = \begin{pmatrix} 1 & \cdots & 1 \\ \vdots & \ddots & \vdots \\ e^{i\,n_1\,t_{P-1}} & \cdots & e^{i\,n_P\,t_{P-1}} \end{pmatrix}.$$

Cette inversion peut être déterminée à partir de l'inverse de la matrice M, s'il elle est inversible, ou à partir du calcul de la pseudo-inverse de la matrice M.

On obtient :

$$\begin{pmatrix} f(0) \\ \dots. \\ f(t_{P-1}) \end{pmatrix} = \begin{vmatrix} 1 & \dots. & 1 \\ \vdots & \vdots & \vdots \\ e^{in_1 t_{P-1}} & \dots.. & e^{in_P t_{P-1}} \end{vmatrix} \begin{pmatrix} R_1 e^{i\phi_1} \\ \vdots \\ R_P e^{i\phi_P} \end{pmatrix}$$

Dans le cas d'un polynôme trigonométrique avec m motifs à partition régulière, on obtient :

$$\begin{pmatrix} f(0) \\ \dots. \\ f(t_{P-1}) \end{pmatrix} = \begin{vmatrix} 1 & \dots. & 1 \\ \vdots & \vdots & \vdots \\ e^{i(a+mK_1)t_{P-1}} & \dots.. & e^{i(a+mK_P)t_{P-1}} \end{vmatrix} \begin{pmatrix} R_1 e^{i\phi_1} \\ \vdots \\ R_P e^{i\phi_P} \end{pmatrix}$$

Le tableau suivant présente un exemple de codage non optimisé :
Exemple de codage non optimisé (blocs de bits définis pour chaque paramètre ou groupe de paramètres) avec a = 1 et m =3 (les combinaisons de a et m pourraient faire l'objet elles-mêmes d'un stockage de données au travers d'un plus grand nombre de possibilités pour les Kj) et N=4

| Bloc | Quantité d'informations | Paramètre | Valeur du paramètre |
|------|------|------|------|
| 1 | 2 bits | R1 | 4 valeurs de 6,9 à 7,2 par pas de 0,1 |
| 2 | 5 bits | Φ1 | 32 valeurs de 0 à 6,2 radians par pas de 0,2 radian |
| 3 | 1 bit | K1 | 1 ou -1 (valeurs spécifiques pour la porteuse) |
| 4 | 2 bits | R2 | 4 valeurs de 2,8 à 3,1 par pas de 0,1 |
| 5 | 5 bits | Φ2 | 32 valeurs de 0 à 6,2 radians par pas de 0,2 radian |
| 7 | 2 bits | R3 | 4 valeurs de 1,8 à 2,1 par pas de 0,1 |
| 8 | 5 bits | Φ3 | 32 valeurs de 0 à 6,2 radians par pas de 0,2 radian |
| 10 | 2 bits | R4 | 4 valeurs de 0,8 à 1,1 par pas de 0,1 |
| 11 | 5 bits | Φ4 | 32 valeurs de 0 à 6,2 radians par pas de 0,2 radian |
| 12 | 15 bits | K2, K3, K4 | Plus de $2^{15}$ possibilités pour arranger 3 valeurs de k parmi 36 choisies (hors 1 ou -2) entre -56 et 55 progressant par pas de 3 |

Cette composition très réduite offre déjà 44 bits de mémorisation c'est-à-dire près de 17 600 milliards de possibilités graphiques.
Bien sûr, l'invention n'est pas limitée aux exemples qui viennent d'être décrits et de nombreux aménagements peuvent être apportés à ces exemples sans sortir du cadre de l'invention. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

**Revendications**

1. Code-barre (1) à deux dimensions encodant une donnée d'entrée d, **caractérisé en ce qu'**il comporte une courbe Cf encodant ladite donnée d'entrée, ladite courbe Cf étant une représentation, dans un plan complexe, d'un polynôme trigonométrique, et **en ce qu'**il comprend en outre une zone (6) qui comprend des moyens pour indiquer des positions d'échantillonnage de la courbe Cf.

2. Code-barre selon la revendication précédente, dans lequel ladite courbe Cf est contenue à l'intérieur d'une zone (2), dite d'encodage de donnée, ledit code-barre comportant en outre une zone (3), dite anticopie, agencée pour recevoir un dispositif anticopie (4), ladite zone anticopie et ladite zone d'encodage de donnée présentant une intersection vide.

**3.** Code-barre selon la revendication précédente, dans laquelle la zone anticopie est une zone centrale par rapport à un centre dudit code-barre.

**4.** Code-barre selon la revendication précédente, dans lequel la zone d'encodage de donnée est une couronne disposée entre deux cercles concentriques, chacun des cercles étant disposé à l'extérieur de zone anticopie.

**5.** Code-barre selon l'une quelconque des revendications précédentes, comportant en outre une marque (5) pour définir une origine angulaire de la courbe Cf.

**6.** Code-barre selon la revendication précédente, dans lequel la marque est disposée dans la zone anticopie comportant la courbe Cf.

**7.** Code-barre selon l'une quelconque des revendications précédentes, dans lequel le polynôme trigonométrique est invariant par rotation d'angle $2\pi/m$ avec m $\geq$ 2.

**8.** Code-barre selon la revendication précédente, dans lequel la courbe Cf présente au moins une invariance par rotation d'un angle non nul autour d'un axe perpendiculaire à une surface plane contenant ladite courbe Cf.

**9.** Code-barre selon la revendication précédente, dans lequel le plan complexe est divisé en m secteurs angulaires, un secteur angulaire contenant une représentation partielle du polynôme trigonométrique, chacun des autres secteurs angulaires comprenant une représentation partielle d'un polynôme trigonométrique.

**10.** Procédé (P) de codage d'une donnée d'entrée $d$ par une courbe formant un code-barre à deux dimensions, ledit procédé comportant les étapes suivantes :

- une détermination (E1), à partir de la donnée d'entrée, d'un mot de codage $c_d$ d'un alphabet de codage, chaque mot de codage comprenant N triplets, chaque triplet comprenant une valeur $R_j$ de rayon, une valeur $\phi_j$ de déphasage et une valeur $n_j$ de vitesse,
- une génération (E2) d'une courbe Cf d'une fonction $f_d$ représentée dans le plan complexe, ladite fonction étant un polynôme trigonométrique définie par l'équation : $f_d(t) = \sum_{j=1}^{N} R_j e^{i\,\phi_j} e^{in_j t}$ avec $t \in [0, 2\pi/m]$ et $m \in N^*$,

où m est un nombre de motif .

**11.** Procédé selon la revendication précédente, dans lequel les valeurs de rayons sont telles que la valeur $R_1$ du premier rayon est strictement supérieure à la somme des valeurs des autres rayons, ce qui peut s'écrire :

$$R_1 - \sum_{j=2}^{N} R_j > 0 \ .$$

**12.** Procédé selon la revendication 10 ou 11, comportant en outre une étape d'impression de la courbe Cf sur un support papier.

**13.** Procédé selon la revendication précédente, comportant en outre une insertion d'un dispositif anticopie, et, lorsque le procédé dépend de la revendication 11, ledit dispositif est placé à l'intérieur du cercle de rayon $R_1 - \sum_{j=2}^{N} R_j$.

**14.** Procédé de décodage d'une donnée $d$ d'entrée, à partir d'une courbe Cf formant un code-barre à deux dimensions et représentant lesdites données, ledit procédé comportant les étapes suivantes :

- une acquisition de ladite courbe Cf et une détermination d'un mot de codage $c_d$ à partir de ladite courbe acquise, la courbe Cf représentant dans le plan complexe une fonction f, la fonction f étant un polynôme trigonométrique définie par l'équation :

$$f(t) = \sum_{j=1}^{N} R_j e^{i\,\phi_j} e^{in_j t} \text{ avec } t \in [0, 2\pi/m] \, et \, m \in N^*,$$

où m $\in N^*$ est un nombre de motif, N est un nombre de triplets, chaque triplet comportant une valeur $R_j$ de rayon, une valeur $\phi_j$ de déphasage et une valeur $n_j$ de vitesse
- une détermination de la donnée d'entrée à partie dudit mot de codage déterminé.

**15.** Procédé selon la revendication 14, dans lequel la détermination du mot de codage à partir de la courbe acquise comprend :

- un échantillonnage de P points de la courbe acquise pour déterminer P couples, chacun des couples comportant d'une part une valeur $t_k$ de la variable temporelle et d'autre part ses coordonnées $f(t_k)$ dans le plan complexe,
- un calcul des N triplets du mot de codage par inversion de la formule :

$$\begin{pmatrix} f(0) \\ \vdots \\ f(t_{P-1}) \end{pmatrix} = M \begin{pmatrix} R_1 e^{i\,\phi_1} \\ \vdots \\ R_P e^{i\,\phi_P} \end{pmatrix} avec\, M = \begin{pmatrix} 1 & \cdots & 1 \\ \vdots & \ddots & \vdots \\ e^{i\,n_1\,t_{P-1}} & \cdots & e^{i\,n_P\,t_{P-1}} \end{pmatrix}.$$

Figure 1

Figure 2

Figure 3

Figure 4

$$d$$

E1 □

$$c_d = (R_j, \phi_j, n_j)$$

E2 □

$$Cf, f_d(t) = \sum_{j=1}^{N} R_j e^{i\phi_j} e^{in_j t}$$

P ↗

## Figure 5

$$Cf, f_d(t) = \sum_{j=1}^{N} R_j e^{i\phi_j} e^{in_j t}$$

D1 □

$$c_d = (R_j, \phi_j, n_j)$$

D2 □

$$d$$

D ↗

## Figure 6

Europäisches
Patentamt

European
Patent Office

Office européen
des brevets

## RAPPORT DE RECHERCHE EUROPEENNE

Numéro de la demande

EP 18 18 2246

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 968 797 A1 (BOURY SAMUEL [FR]; MEZZAROBBA OLIVIER [FR]) 15 juin 2012 (2012-06-15) | 10,14 | INV. G06K19/06 G06K7/14 |
| Y | * page 8, ligne 17 - page 9, ligne 6 * | 12,13 | |
| A | * page 10, ligne 4 - ligne 10 * * figures 5,6A,6B,8 * ----- | 1-9,11, 15 | |
| Y | AU 2007 254 626 A1 (CANON KK) 9 juillet 2009 (2009-07-09) | 12 | |
| A | * page 28; revendications 1-3 * * figures 1-3 * ----- | 1-11, 13-15 | |
| Y | US 2015/302421 A1 (CATON MICHAEL [US] ET AL) 22 octobre 2015 (2015-10-22) * alinéa [0195] * * figure 13A * ----- | 13 | |
| A | US 2007/086653 A1 (JAVIDI BAHRAM [US] ET AL) 19 avril 2007 (2007-04-19) * alinéa [0059] * * figure 6 * ----- | 7,8 | |
| | | | DOMAINES TECHNIQUES RECHERCHES (IPC) |
| A | EP 0 706 146 A2 (BECTON DICKINSON CO [US]) 10 avril 1996 (1996-04-10) * figure 2 * ----- | 9 | G06K |
| A | US 2009/090786 A1 (HOVIS GREGORY [US]) 9 avril 2009 (2009-04-09) * alinéa [0036] - alinéa [0055] * * figures 1-5 * ----- | 1-15 | |
| A | WO 2005/106769 A2 (DIRECT MEASUREMENTS INC [US]; HOVIS GREGORY [US]) 10 novembre 2005 (2005-11-10) * le document en entier * ----- | 1-15 | |

Le présent rapport a été établi pour toutes les revendications

| Lieu de la recherche | Date d'achèvement de la recherche | Examinateur |
|---|---|---|
| Munich | 30 novembre 2018 | Bhalodia, Anil |

EPO FORM 1503 03.82 (P04C02)

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................................
& : membre de la même famille, document correspondant

**EP 3 425 568 A1**

**ANNEXE AU RAPPORT DE RECHERCHE EUROPEENNE**
**RELATIF A LA DEMANDE DE BREVET EUROPEEN NO.**

EP 18 18 2246

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-11-2018

| Document brevet cité au rapport de recherche | | Date de publication | Membre(s) de la famille de brevet(s) | | Date de publication |
|---|---|---|---|---|---|
| FR 2968797 | A1 | 15-06-2012 | AUCUN | | |
| AU 2007254626 | A1 | 09-07-2009 | AUCUN | | |
| US 2015302421 | A1 | 22-10-2015 | AUCUN | | |
| US 2007086653 | A1 | 19-04-2007 | US 2007086653 A1 | | 19-04-2007 |
| | | | WO 2007047552 A1 | | 26-04-2007 |
| EP 0706146 | A2 | 10-04-1996 | AU 693572 B2 | | 02-07-1998 |
| | | | CA 2155297 A1 | | 27-02-1996 |
| | | | EP 0706146 A2 | | 10-04-1996 |
| | | | JP 2749290 B2 | | 13-05-1998 |
| | | | JP H0877289 A | | 22-03-1996 |
| US 2009090786 | A1 | 09-04-2009 | AU 2009296901 A1 | | 01-04-2010 |
| | | | CA 2744527 A1 | | 01-04-2010 |
| | | | EP 2344987 A1 | | 20-07-2011 |
| | | | US 2009090786 A1 | | 09-04-2009 |
| | | | WO 2010036514 A1 | | 01-04-2010 |
| WO 2005106769 | A2 | 10-11-2005 | AUCUN | | |

EPO FORM P0460

Pour tout renseignement concernant cette annexe : voir Journal Officiel de l'Office européen des brevets, No.12/82